# EUROPEAN PATENT APPLICATION

(11) **EP 2 706 500 A2**
(43) Date of publication of application: **12.03.2014**
(21) Application number: 12779819.7
(22) Date of filing: 03.05.2012
(51) Int. Cl.: G06Q 40/06

(54) **METHOD FOR DISPLAYING CURRENT DISPARATE RATIO FOR ENTERPRISE VALUE USING DIFFERENCE BETWEEN MARKET VALUE FOR ENTERPRISE AND BASIC ANALYSIS**

(30) Priority: 04.05.2011 KR 20110042311
(71) Applicant: CS Co., Ltd, Daejeon 302-802 (KR)
(72) Inventor: HAN, Changse, Daejeon 305-340 (KR)
(74) Representative: Ablett, Graham Keith
(86) International application number: PCT/KR2012/003483
(87) International publication number: WO 2012/150828

(57) **Abstract**

The present invention is characterized by the steps of: entering personal information into a stock information server on the basis of a membership verification procedure; storing and managing information related to stocks of interest for a member by using the stock information server; receiving total market value data for the stocks of interest from the stock information sever; receiving net asset value data for the stocks of interest from the electronic disclosure system server; storing the total market value data and net asset value data in the stock information server in a graphic format by time; and displaying the total market value data and net asset value data with each set to a predetermined axis.

## Description

### Technical Field

The present invention relates to a method for displaying a current disparate ratio for an enterprise value using a difference between market value for an enterprise and a basic analysis, and more particularly, to a method for displaying a current disparate ratio for an enterprise value using a difference between market value for an enterprise and a basic analysis in that, even though the ordinary person or the stock beginner do not know the professional stock terminology, they catch only the disparate ratio of the enterprise value, thereby easily determining the investment in stocks.

### Background Art

Presently, there is a rod chart or a bar chart in a stock chart system, which is the most widely used in the world. They have been used until now from decades ago. Also, according to the progress of a computer technology and an Internet technology, a trading system for dealing in stock using a stock chart information and a computer program is widely established. However, since the existed chart system has the fundamental problems, it is very circumscribed in the investment decisions. In this method, the user predicts rise or fall of the stock price by the chart system and determines the investment decision in accordance with the indicator of the chart. In the existed chart system, it requires the various knowledge on the difference between the white body and the black body, the difference of the bar shape according to the rise or fall of the share price, and the meaning of the stock price according to the average line of 120 days, 60 days, 20 days, and 5 days etc. Also, if the investor is not familiar with the terminology such as a psychological line, an ACD, and a RSI, etc., there is a problem in that it is difficult to easily approach the stock. Moreover, as though the investor is familiar with the terms, it is difficult for the user, who uses the current chart of illustrating the rise and fall of a price of a single share, to easily grasp the investment timing through the entire flow of the stock price. That is, since there are differences between total numbers of issued stocks of each enterprise, for example, since the face value and the number of stocks are different from each other even in the same construction companies, there is a great concern in that the distorted information can be transmitted to the inventor owing to only the existed chart of illustrating the price of the single share.

Korean Patent Publication No. 2007-0014616 (Date of publication: 01/02/2007) is related to a method for selecting a stock item by a portfolio and a quantitative method in a stock asset management system. The patent application is characterized in that it can select an optimal investment portfolio fit for a situation of a stock market and personal preference of the investor through multilateral evaluation among quantity and multifactorial combinations of portfolios constituted by a simulation. However, there is cumbersome to directly set up period setting, universal type, existence and nonexistence of outliers, benchmark, trading cost, selection of factor combination, number of top and bottom items, weighting method, market capitalization, existence and nonexistence of trading value setting, existence and nonexistence of administrative issue, and factor selection etc. for the simulation conditions. Also, for the simulation results by means of the condition setting, there is an inconvenience in that the user should repeatedly perform the basic filtering operation on the average profitability, the risk, and the stability of the period in person. Moreover, it is not easy for the ordinary person or the beginner to easily determine the investment of the interest item in stocks based on the above techniques, owing to the complex process thereof. Furthermore, even though it goes through the complex process of the technology, there is a limit to the clear investment decision. In other words, the patent application describes that it is desirable to find the combination that maximizes the revenue at a level that is satisfactory to some extent in terms of a average risk. Accordingly, there is a problem in that it is difficulty for the beginner to induce the easy and clear investment decision.

Korea Patent Publication No. 2005-0082851 (Date of publication: 24/08/2005) relates to a stock price analysis system and a stock price analysis method using the same. The patent application is characterized in that a stock price fluctuation chart having three different cycles for the same item is simultaneously displayed on one screen according to the selection of the user. In the above technique, the chart analyzed by three units such as daily unit, weekly unit, and monthly unit is displayed simultaneously on one screen. However, it is insufficient for the beginner to easily induce the investment decision. In other words, where the user selects the desiring item or the interest groups, only the different types of the chart such as one minute rod, five minutes rod, and thirty minutes rod etc. are written on one screen at the same time. However, in case of the beginner of unknowing the minute bar, there is a problem in that it cannot easily induce the investment decision. In case of displaying the stock price pattern on the screen, since it is simultaneously displayed on only the screen operated by the conventional HTS system, there is a limit to guide the easy investment decision for the beginner.

### Disclosure

### Technical Problem

Accordingly, the present invention has been made to solve the above-mentioned problems occurring in the prior art, and an object of the present invention is to provide a method for displaying a current disparate ratio for an enterprise value using a difference between market value for an enterprise and a basic analysis in that it expresses a disparate ratio between two indexes as a graph form through a basic analysis and an accounting reference accepted and published generally by means of the electronic disclosure system and so on in connection with the market value of the enterprise traded in a stock exchange, a KOSDAQ, and a curb market etc., thereby increasing a convenience of an information requestor and an investment objectivity.

### Technical solution

In order to accomplish this object, there is provided a method for displaying a current disparate ratio for an enterprise value using a difference between market value for an enterprise and a basic analysis comprising steps of: entering personal information into a stock information server on the basis of a membership verification procedure; storing and managing information related to interest items of a membership by using the stock information server; receiving a market capitalization data for the interest items from the stock information sever; receiving a net asset value data for the interest items from the electronic disclosure system server; storing the market capitalization data and net asset value data in a graphic format by time through the stock information server; and assigning the market capitalization data and net asset value data to a predetermined axis to be displayed thereon. Here, the method further comprises steps of judging as to whether the difference between the market capitalization data and net asset value data reaches the proper disparate ratio or not through the stock information server.

Also, the method according to the present invention further comprises steps of assigning the net income illustrated in the income statement and the market capitalization data to a predetermined axis for a certain period through the online network through the stock information service server and the electronic disclosure system server to be displayed thereon and judging as to whether the difference between the market capitalization data by means of the net income and the actual market capitalization data by means of the variation in the stock price reaches a proper disparate ratio or not through the stock information server.

Also, the method according to the present invention further comprises steps of assigning the quarterly total cash data according to a cash flow and the market capitalization data to a predetermined axis for a certain period through the stock information service server and the electronic disclosure system server by means of the online network and judging as to whether the difference between the quarterly total cash data and the market capitalization data reaches a proper disparate ratio or not through the stock information server.

In order to accomplish this object, there is provided a method according to another embodiment of the present invention comprising steps of: entering personal information into a stock information server on the basis of a membership verification procedure; storing and managing information related to interest items for a membership by using the stock information server; receiving a market capitalization data for the interest items from the stock information sever; receiving a net asset value data for the interest items from the electronic disclosure system server; storing the market capitalization data and net asset value data in a graphic format by time through the stock information server; displaying the stock information data on a preferred stock and a common stock of the interest item of the membership stored in the stock information server and the disparate ratio on the data difference of the preferred stock and the common stock; and judging as to whether the data difference between the preferred stock and the common stock reaches a proper disparate ratio or not through the stock information server.

Also, in order to accomplish this object, there is provided a method according to further another embodiment of the present invention comprising steps of: entering personal information into a stock information server on the basis of a membership verification procedure; storing and managing information related to interest items for a membership by using the stock information server; receiving a market capitalization data for the interest items from the stock information sever; receiving a net asset value data for the interest items from the electronic disclosure system server; storing the market capitalization data and net asset value data in a graphic format by time through the stock information server; assigning the market capitalization data and net asset value data to a predetermined axis to be displayed thereon; calculating an investment decision index capable of deciding acceptance or rejection of the investment based on the market capitalization data and the net asset value data stored in the stock information server; and making the investment decisions by means of the investment decision index through the stock information server.

The investment decision index of the present invention is a Price Book-value Ratio Index (PBRI) of deducting an average of a Price Book-value Ratio of a given period of time from the current Price Book-value Ratio (PBR) as a percentage, a Price Earning Ratio Index (PERI) of deducting an average of a Price Earning Ratio (PER) of a given period of time from a Price Earning Ratio (PER) of the recent four quarters as a percentage, or a Price per Sales Ratio Index (PSRI) of showing the price of the common stock on sales per share of dividing the sales of the recent four quarters by the number of shares.

Also, the present invention further comprises displaying a new product information of the enterprise corresponding to the interest item, a subsidiary enterprise information, a corporate communication information related to the investment information, and sales information and update materials of the corresponding enterprise through the stock information server.

Also, the present invention further comprises expressing a plus (+) component and a minus (-) component of the assets of the enterprise corresponding to the interest item as the amount of money and the percentage to be displayed thereon.

### Advantageous Effects

According to the method for displaying the current disparate ratio for the enterprise value using the difference between the market value for the enterprise and the basic analysis, there are effects in that it can make easy and accurate investment decisions through only the graphed disparate ratio of the enterprise value and the beginner of unknowing the numerical values such as the PBR, PER, and PSR etc., which are the professional jargon, can directly catch the disparate ratio, so that it can judge the exact investing timing and it expresses the disparate ratio between two indexes as a graph form through the analysis and the accounting reference accepted generally, thereby increasing the convenience of the information requestor and an investment objectivity.

### Brief Description of the Drawings

The above and other objects, features and advantages of the present invention will be more apparent from the following detailed description taken in conjunction with the accompanying drawings, in which:
FIG. 1 is a block diagram illustrating the overall configuration according to the present invention;
FIG. 2 is a block diagram illustrating stock information server according to the present invention;

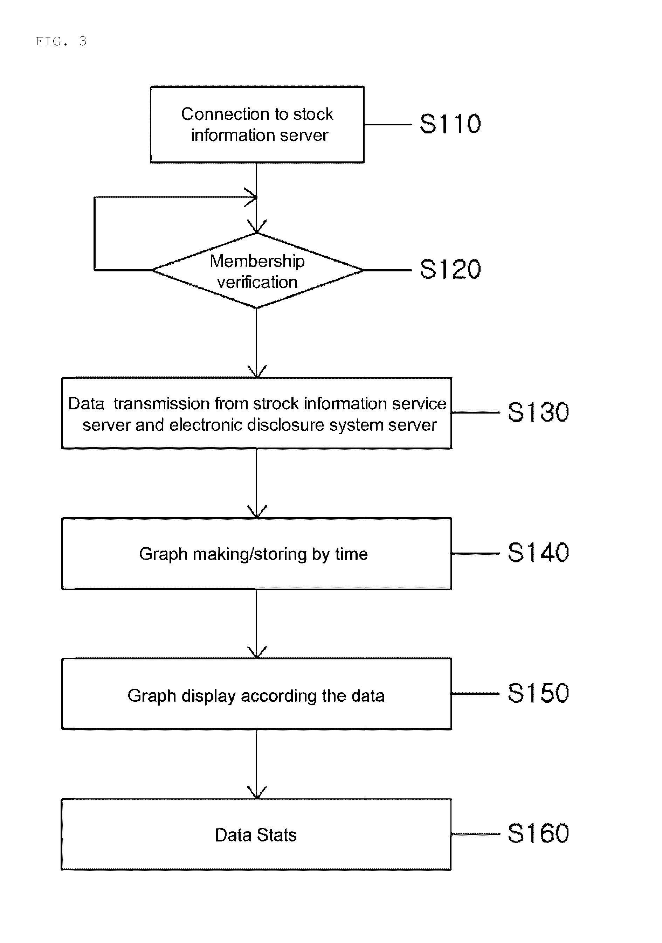

FIG. 3 is a flow chart illustrating a data displaying method according to the present invention;
FIG. 4 is a graph diagram illustrating a market capitalization for a period of time according to the present invention;
FIG. 5 is a graph diagram illustrating a net income for a period of time according to the present invention;
FIG. 6 is a graph diagram illustrating a cash flow for a period of time according to the present invention;
FIG. 7 is a graph diagram capable of making the investment decision through a market capitalization graph according to one embodiment of the present invention;
FIG. 8 is a graph diagram illustrating a graph of a stock price change of a preferred stock and a common stock and a disparate ratio between the price difference of the preferred stock and the common stock;
FIG. 9 is a diagram of displaying a new product information of the enterprise corresponding to the favorite stocks, a subsidiary enterprise information, a corporate communication information related to the investment information, and sales information and update materials of the corresponding enterprise according to one embodiment of the present invention;
FIG. 10 is a diagram of illustrating a flowchart for implementing the exemplary embodiment of FIG. 9;
FIG. 11 illustrates a Price Book-value Ratio Index (PBRI) of showing a numerical value of deducting an average of a Price Book-value Ratio of a given period of time from the current Price Book-value Ratio (PBR) as a percentage;
FIG. 12 illustrates a Price Earning Ratio Index (PERI) of showing a numerical value of deducting an average of a Price Earning Ratio of a given period of time from a Price Earning Ratio (PER) of the recent four quarters as a percentage;
FIG. 13 illustrates a Price per Sales Ratio Index (PSRI) of showing the price of the common stock on sales per share (SPS) of dividing the sales of the recent four quarters by the number of shares; and
FIG. 14 is graph diagram of expressing a plus (+) component and a minus (-) component of the assets of the enterprise corresponding to the interest item as the amount of money and the percentage to be displayed quarterly according to one embodiment of the present invention.

### <Descriptions on reference numbers for the major components in the drawings>

10: portable terminal
20: computer
30: stock information server
32: display module
34: stock judge module
35: information data base
40: stock information service server
50: electronic disclosure system server

### Best Mode

### Mode for Invention

Hereinafter, an exemplary embodiment of the present invention will be described in detail with reference to the accompanying drawings.

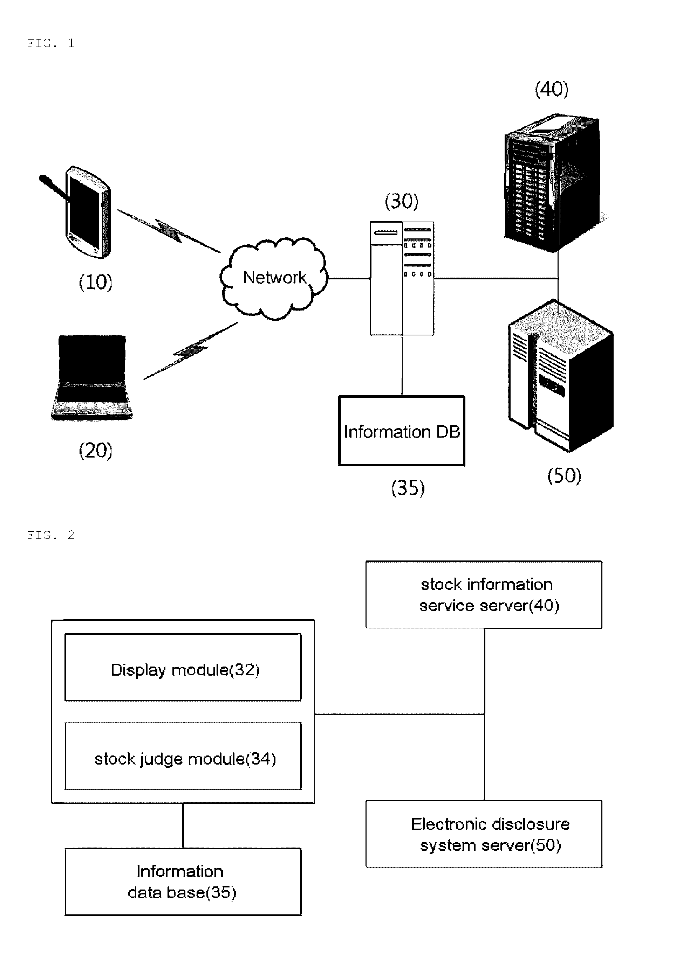

A system of implementing a method for displaying a current disparate ratio for an enterprise value using a difference between market value for an enterprise and a basic analysis according to the present invention serves to provide information to its members through a computer device installed on an application program for receiving the market capitalization and the net asset value for a period of time on-line. For this purpose, as shown in FIG. 1, the system of the present invention includes a stock information service server 40, and an electronic disclosure system server 50, and a stock information server 30. The stock information server 30 is connected to an information database 35 and linked with the portable terminal 10 such as a cell phone etc. or the computer 20 through the network. More concretely, the stock information service server 40 is any server for receiving the market capitalization data for a period of time on-line. That is, the market capitalization data for a period of time, for example, the past 10 years is stored therein and then, is transmitted to the stock information server 30 according to the present invention through the network such as the online communication etc. The electronic disclosure system server (DART) 50 is any server for receiving the net asset value for a period of time through the online communication. That is, the net asset value data according to financial statements, balance sheet, profit and loss statement, PER, PBR, PSR, intangible assets, land assets, and inventory assets etc. is stored therein and then, is transmitted to the stock information server 30 through the network such as the online communication etc. The stock information server 30 is any server for assigning the market capitalization data and the net asset value data to a predetermined axis and judging as to whether the difference between each data value reaches the proper disparate ratio or not.

In other words, as shown in FIG. 2, the stock information server 30 includes a display module 32 for displaying the market capitalization data and net asset value data, the net income data and market capitalization data, and the quarterly total cash data and market capitalization data with each set to a predetermined axis and a stock judge module 34 for judging as to whether the differences between the market capitalization data and net asset value data, the net income data and market capitalization data, and the quarterly total cash data and market capitalization data reach the proper disparate ratio or not. Also, the stock information server 30 can statistically display the market capitalization data and net asset value data, the net income data and market capitalization data, and the quarterly total cash data and market capitalization data for a predetermined period. That is, the stock information server 30 can further include a statistical processing unit for performing an extraction, an editing, an evaluation, and interpretation and a processing of an access data, a search data, and each of the above-mentioned data and an definition of the disparate ratio illustrated as a predetermined numerical value. Accordingly, the stock information server serves to analyze the access information stored in the access statistical database according to the statistical processing unit in accordance with the search condition of a plurality of interest items. For example, the stock information server serves to analyze/process the access statistical information and the statistical information of each data depending on certain criteria so as to transmit them to the membership terminal. Also, where the disparate ratio is more than the predetermined numerical value, it can be highlighted.

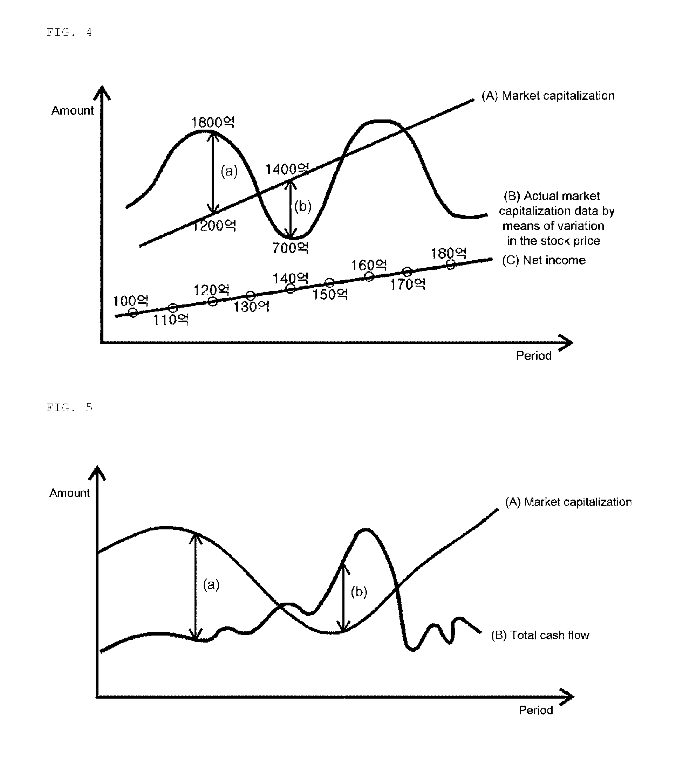

Hereinafter, the method for displaying the current disparate ratio for the enterprise value using the difference between the market value for the enterprise and the basic analysis according to one embodiment of the present invention will be described in detail with reference to the accompanying drawings. Firstly, where the membership of wanting the investment is connected to the stock information server 30, the personal information is entered into the stock information server on the basis of a membership verification procedure (S110 and S120). Then, when a plurality of interest items is selected by the membership, it stores and manages the information by using the stock information server 300. At this time, the stock information server 300 receives the market capitalization data from the stock information service sever and receives the net asset value data from the electronic disclosure system server (S130 and S140). Thereafter, the market capitalization data and the net asset value data are stored therein in a graphic format by time to be displayed (S150). Also, each data is statistically illustrated. Besides, the stock information server 30 can statistically display the net income data and market capitalization data and the quarterly total cash data and market capitalization data for a certain period. Also, the stock information server 30 can judge as to whether the difference between the market capitalization data and the net asset value data reaches the proper disparate ratio or not. More concretely, as shown in FIG. 4, a graph having the market capitalization data set to a predetermined axis is illustrated. Where the market capitalization has been heightened in comparison with the net asset through the disparate ratios (a) and (b) between the net asset (A) of increasing in a step shape and the market capitalization shown in a sine wave form (corresponding to (a) in the graph), it is judged that the stock price is overvalued (in the graph (a)) and then, the membership can be cautious about his investment. On the contrary, where the market capitalization has been lowered in comparison with the net asset (corresponding to (b) in the graph), it is judged that the stock price is undervalued and then, the membership understand that it is the right time to invest. At this time, where the ratios of the market capitalization on the net asset go up and down in the fluctuation shape of +100% ~ -50% through the stats of the past 10 years, if the disparate ratio of the market capitalization on the current net asset is -20%, since it is judged that the probability of a rise in stock price is higher than that of a fall in stock price, it is possible to show more aggressiveness on the investment. According to the present invention, as shown in FIG. 5, it further includes a step of assigning the net income illustrated in the income statement and the market capitalization data to a predetermined axis for a certain period through the stock information service server and the electronic disclosure system server by means of the online network to be displayed thereon. At this time, where the net profit graph (C) has been increased a billion quarterly, the market capitalization graph (A; enterprise accounting value) has been linearly increased for a fixed percentage accordingly. However, the substantial market capitalization graph (B) goes up and down in an irregular shape according to the variation in the stock price as shown in the drawing. Accordingly, according to the method for displaying the current disparate ratio for the enterprise value using the difference between the market value for the enterprise and the basic analysis according to the present invention, since the calculative market capitalization graph (A) according to the net income and the substantial market capitalization graph (B) according to the stock price changes are simultaneously displayed thereon, it is for the ordinary person to easily judge the time of investment according to the current disparate ratio of each quarter.

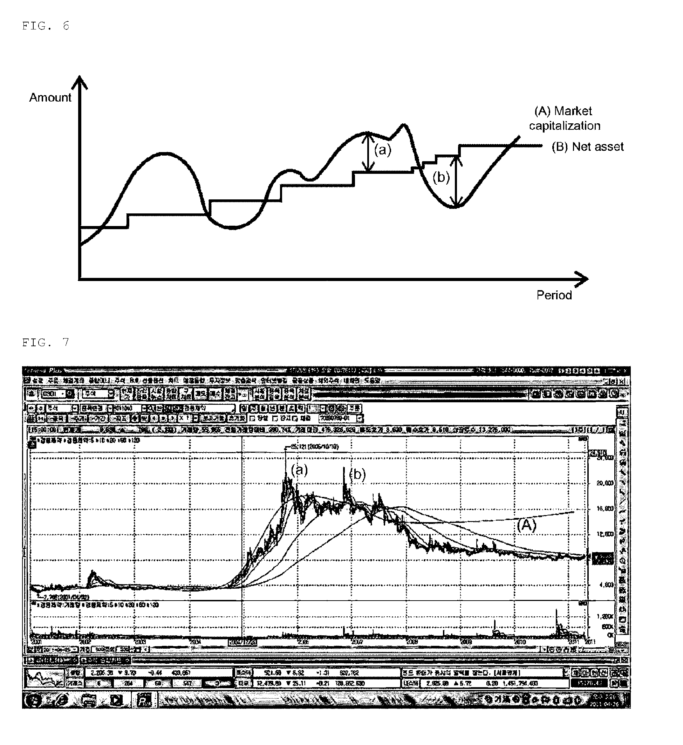

As shown in FIG. 6, the present invention assigns the quarterly total cash data according to a cash flow (B) and the market capitalization data (A) to a predetermined axis for a certain period through the stock information service server and the electronic disclosure system server by means of the online network to be displayed thereon. At this time, where the market capitalization is higher than the cash flow, it is overvalued (a). Also, where the market capitalization is lowered in comparison with the high cash flow, since the enterprise value is still low (B), it is for the membership to directly judge the time of investment according to the current disparate ratio.

As shown in the table 1 below, the stock information server serves to display itemized elements of a plus (+) component and a minus (-) component of the assets such as quick assets, land assets, accounts receivable, inventories, intangible assets, loans, and structures etc., which are considerably influenced on the asset value according to the financial statements, as a percentage of total asset values through the stock information service server and the electronic disclosure system server.

**TABLE 1**

| Type of capital | | | Ratio (%) |
|---|---|---|---|
| Assets | (+) Elements | Quick Assets | 10 |
| | | Land assets | 10 |
| | (-) Elements | Accounts Receivable | 5 |
| | | Inventories | 5 |
| | | Intangible assets | 10 |
| | | Loans | 10 |
| | The other | Structures | 50 |
| Sum | | | 100 |

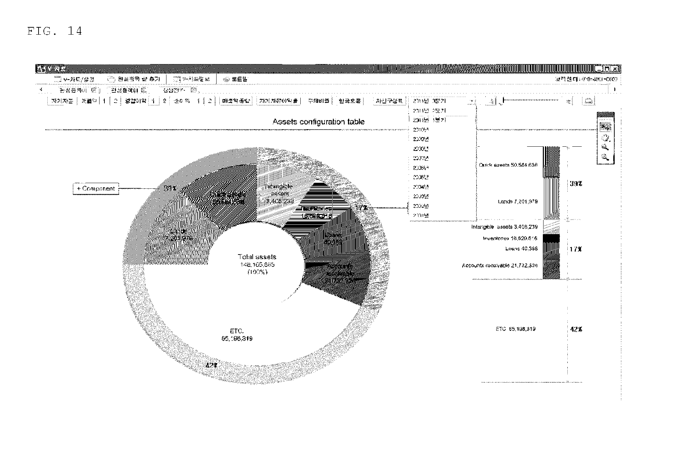

According to the present invention, for example, as though the assets are 100 billion identically, if one thing is cash equivalents of 70% and inventories of 30% and another is cash equivalents of 10% and inventories of 90%, there is a fundamental difference between them. However, the existed financial statements and stock price graph cannot tell the difference between them. That is, if it does not really understand the cash equivalents behind the asset of 100 billion, there is substantial room for losing moneys on bad investments. However, in the present invention, the cashable asset is displayed on the table, it is possible to provide the right information to the members. Also, if the intangible asset is 90% and the tangible asset is 10%, since the intangible asset can include patent rights of wanting in cash, cautions are required. However, in the present invention, since this data is displayed in a lump, even the beginner can easily understand it, so that it is possible to be cautious investment. FIG. 14 is graph diagram of expressing a plus (+) component and a minus (-) component of the assets of the enterprise corresponding to the interest item as the amount of money and the percentage to be displayed quarterly according to one embodiment of the present invention. As shown, since the asset structure of the enterprise is clearly displayed as a graph, the beginner can easily understand the asset quality of the corresponding enterprise, so that it is possible to be cautious investment. Also, the plus (+) elements such as land and quick asset and minus (-) elements such as intangible assets, inventories, loans, and trade receivable etc. on the current total assets are digitized through the data collected in the information DB of the stock information server to be displayed thereon. Also, the ratio of the plus (+) and minus (-) elements on the total assets is displayed as circular or bar graph, even the ordinary person or the beginner can easily understand the asset quality of the corresponding enterprise, without spending a lot of time.

FIG. 7 is a graph diagram of adding a chart of illustrating a flow of a stock price graph on a single share from 2001 to April 2011 to a graph (A) of illustrating a flow of the market capitalization according to one embodiment of the present invention. As shown, the market price of the single share and the amount of the price and market capitalization are separately displayed and only the flow of the graph can be compared with each other. For example, as shown in FIG. 7, the standard outstanding shares of Kyungdong Pharm. Co. LTD. is 6,000,000, 3,000,000 shares ((a); the bonus issue) is made on October14, 2005, and 4,275,000 shares ((b); capital increase by issuing new stocks) is made on November 30, 2006. At this time, in the stocks beginners, since it is judged that the stock price falls to 1/3 of the value through only the graph, he thinks that it is not worth investing. However, according to the method for displaying the current disparate ratio for the enterprise value using the difference between the market value for the enterprise and the basic analysis according to one embodiment of the present invention, it can be seen that the interest item has been incorrectly evaluated through the market capitalization graph (A). Accordingly, it is possible to provide the right investment through the graph (A) of the market capitalization.

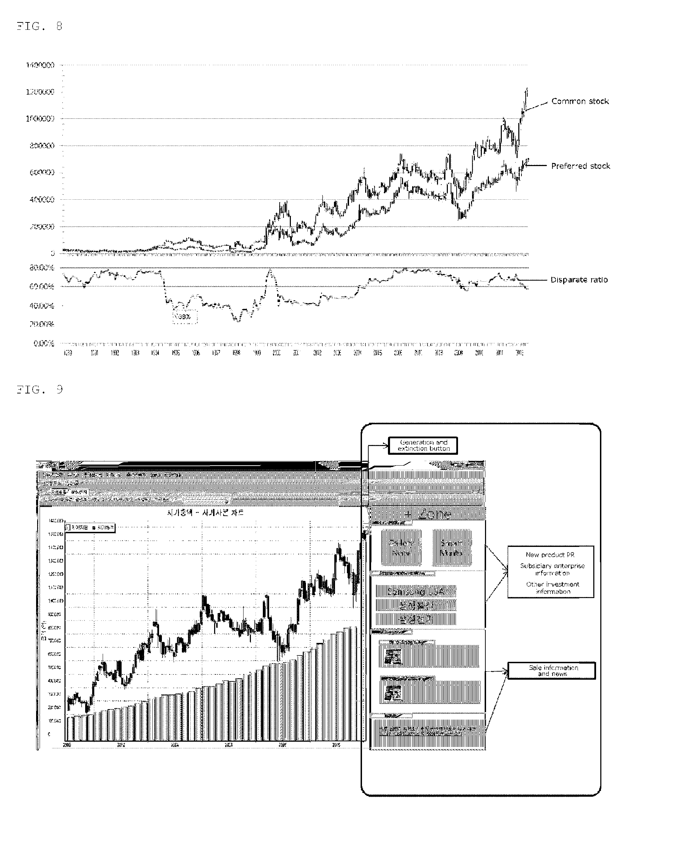

FIG. 8 is a graph diagram of adding the disparate ratio between the price difference of the preferred stock and the common stock of the corresponding enterprise to a graph of the stock price change of the preferred stock and the common stock. As shown, the preferred stock, the common stock, and the disparate ratio between the price difference of the preferred stock and the common stock can be displayed on one screen, so that it is possible to judge the investment of the preferred stock. Here, the preferred stock is issued for the stock investors, who want a stability other than a speculative equity so as to facilitate the financing of the enterprise, where its financial structure is worse. In view of the enterprise, there is an advantage to facilitate the financing without diluting on the voting right for securing additional funding. In view of the investors, who are not interested in management control, there is an advantage to be able to have the preferential status of the distribution on the enterprise's proprietary content such as the profits, dividends, and the distribution of the remaining assets etc. In the present invention, the ratio of the preferred stock on the common stock of the corresponding enterprise is displayed as the disparate ratio, so that the investment decisions on the preferred stock can be made in a timely manner. According to the present invention, as though the corporate profits are steady, when the stork price is making slow progress owing the bad stock trend, in adjusting stock trends in that the preferred stock having a high dividend rate is shined, the judge of the investment is made through the disparate ratio between the preferred stock and the common stock, so that the beginner of the stock can easily make an investment in stock. According to the present invention, where the membership of wanting the investment is connected to the stock information server 30, the verification procedure is performed. After the verification procedure is completed, the plurality of interest items is selected by the membership and then, the information on the interest item is stored and managed through the stock information server 300. At this time, the stock information server 300 receives the market capitalization data from the stock information service sever and receives the net asset value data from the electronic disclosure system server. Thereafter, the market capitalization data and the net asset value data are stored therein in a graphic format by time to be displayed. Also, each data is statistically stored. Thereafter, the common stock, the preferred stock, and the disparate ratio between the price difference of the preferred stock and the common stock among the information on the interest item are displayed and the investment judge on the preferred stock is performed through the displayed disparate ratio, so that the investment on the preferred stock can be appropriately made.

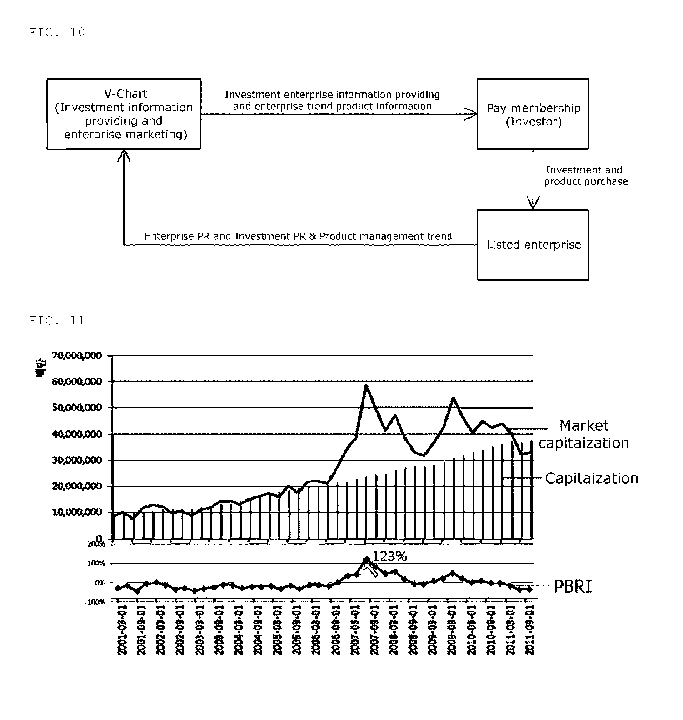

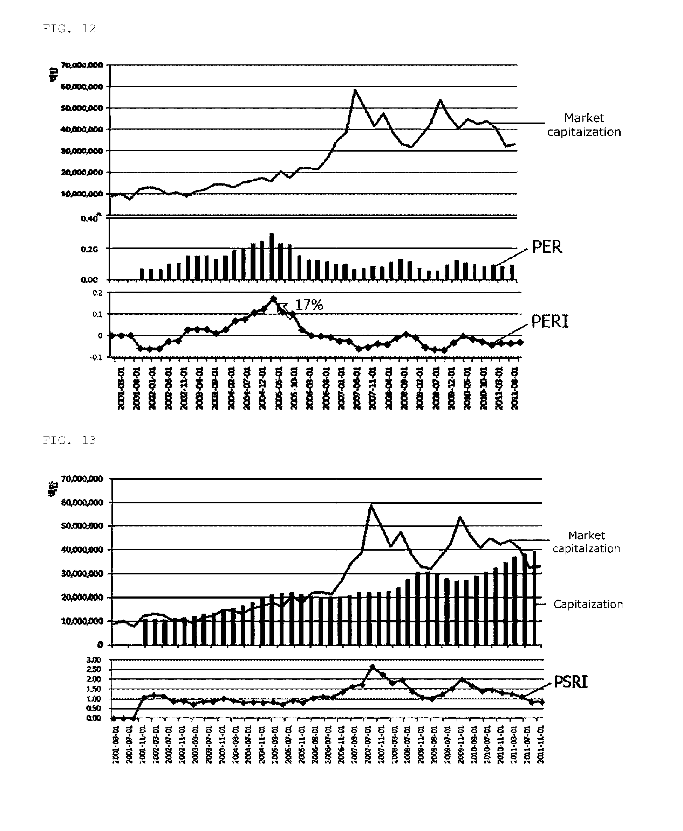

FIG. 9 is a diagram of displaying a new product information of the enterprise corresponding to the favorite stocks, a subsidiary enterprise information, a corporate communication information related to the investment information, and sales information and update materials of the corresponding enterprise according to one embodiment of the present invention. FIG. 10 is a diagram of illustrating a flowchart for implementing the exemplary embodiment of FIG. 9. According to the present invention, where the personal information is entered into the stock information server on the basis of a membership verification procedure, the information related to the interest item of the membership is stored and managed by means of the stock information server. Also, the market capitalization data and the net asset value data are inputted through the stock information service sever and the electronic disclosure system server, respectively to be displayed through a predetermined axis. Where the membership is logged on to the site named as a V-chart operated by the stock information server of the present invention through the verification procedure, it may need the information of the enterprise corresponding to the interest item. According to the present invention, the information of the corresponding enterprise can be displayed on one side of the screen for displaying the market capitalization data and the net asset (equity capital) value data according to the selection of the membership, thereby easily understanding various information of the corresponding enterprise. That is, as shown in FIG. 9, a generation and extinction button is provided on the right side of the screen for displaying the market capitalization data and the net asset value data, so that the related information can be displayed or omitted according to the selection of the membership. For example, the information of the corresponding enterprise can include a new product information, a subsidiary enterprise information and/or the other investment information, and a sales information of products of the corresponding enterprise and/or a business-related news data. Therefore, according to the embodiment of the present invention, the enterprise corresponding to the interest item of the membership can appropriately promote the products and the enterprise's management trends to the membership. The corporate investors (membership) can clearly check out the products of the enterprise corresponding to the interest item and the enterprise's management trends. According to the present invention, after it receives the market capitalization data from the stock information service sever according to the interest item and receives the net asset value data from the electronic disclosure system server according to the interest item, the market capitalization data and the net asset value data are stored in a graphic format by time through the stock information server to be displayed. Thereafter, it calculates an investment decision index capable of deciding acceptance or rejection of the investment based on the market capitalization data and the net asset value data. Accordingly, the appropriate investment decisions can be made depending on the investment decision index. FIG. 11 through FIG. 13 are graph views illustrating an investment decision index of one embodiment of the present invention. FIG. 11 illustrates a Price Book-value Ratio Index (PBRI) of showing a numerical value of deducting an average of a Price Book-value Ratio of a given period of time from the current Price Book-value Ratio (PBR) as a percentage. FIG. 12 illustrates a Price Earning Ratio Index (PERI) of showing a numerical value of deducting an average of a Price Earning Ratio of a given period of time from a Price Earning Ratio (PER) of the recent four quarters as a percentage. FIG. 13 illustrates a Price per Sales Ratio Index (PSRI) of showing the price of the common stock on sales per share (SPS) of dividing the sales of the recent four quarters by the number of shares.

According to the present invention, it is characterized in that the beginners, who are in ignorance of the stock jargon such as the PBR, PER and PSR etc., can invest in stock at an appropriate time. That is, it can calculate the investment decision index related to the interest item based on the PBR, PER and PSR etc., so that the appropriate investment decisions can be made by means of the investor including the beginner. As an example of the investment decision index, when the average value of the Price Book-value Ratio (PBR) for the past period of time is "0", the disparate ratio between the average value and the current Price Book-value Ratio (PBR) is displayed in a graphic format, so that it can judge the proper investing timing through the trend of the disparate ratio between the average value and the past period (quarter). In the present invention, for example, it calculates the average value of the Price Book-value Ratio (PBR) based on the period of the past 10 years. However, the period can be varied according to a period of life of the corresponding enterprise related to the interest item or the listed time of the interest item and so on. That is, if there is enough time to judge the soundness of the enterprise in general, it is possible to adjust the period as necessary. The Price Book-value Ratio Index (PBRI) of the corresponding quarter is the numerical value of deducting an average of the Price Book-value Ratio of a given period of time, for example, the period of the past 10 years from the current Price Book-value Ratio (PBR) of the corresponding quarter as the percentage. According to the present invention, when the Price Book-value Ratio Index (PBRI) is below "0", it is judged that there is the right time to invest. That is, where the Price Book-value Ratio Index (PBRI) is below "0", it is suggested that the share price is traded at a low price in comparison with the past data. Accordingly, even if the investor is not familiar with the terms and definition of the Price Book-value Ratio (PBR), it can encourage the proper investment decisions.

As another example of the investment decision index, when the average value of the Price Earning Ratio (PER) for the past period of time is "0", the disparate ratio between the average value and the current fourth quarter Price Earning Ratio (PER) is displayed in a graphic format, so that it can judge the proper investing timing through the trend of the disparate ratio between the average value and the past period (quarter). In the above embodiment, it calculates the average value of the Price Earning Ratio (PER) based on the period of the past 10 years. However, the period can be varied according to a period of life of the corresponding enterprise related to the interest item or the listed time of the interest item and so on. That is, if there is enough time to judge the soundness of the enterprise in general, it is possible to adjust the period by the existing state of things. According to the present invention, when the Price Earning Ratio Index(PERI) is displayed therein, the market capitalization data is displayed together with the price-earnings ratio (PER) in a graph format, so that the disparate ratio between the market capitalization data and the price-earnings ratio (PER) can be illustrated. Also, the Price Earning Ratio Index(PERI) can be displayed together with the market capitalization data and the price-earnings ratio (PER)in a graph format. Since the net income data is added up based on the recent one year to be announced, the Price Earning Ratio Index (PERI) of the corresponding quarter is the numerical value of deducting an average of the Price Earning Ratio of a given period of time, for example, the period of the past 10 years from the current Price Earning Ratio (PER) of the recent four quarters as the percentage. According to the present invention, when the Price Earning Ratio Index (PERI) is below "0", it is judged that there is the right time to invest. That is, where the Price Earning Ratio Index (PERI) is below "0", it is suggested that the share price is traded at a low price in comparison with the past data. Accordingly, even if the investor is not familiar with the terms and definition of the Price Earning Ratio (PER), it can encourage the proper investment decisions through the graph trend of the Price Earning Ratio Index (PERI).

As further another example of the investment decision index, the price of the common stock on sales per share (SPS) of dividing the sales of the recent four quarters by the number of shares is illustrated in a graph form, the investment decisions can made according to the disparate ratio from the reference value. In the present invention, the price of the common stock on sales per share is called as the Price per Sales Ratio Index (PSRI). Here, the reference value of the Price per Sales Ratio Index (PSRI) is "1". Where the Price per Sales Ratio Index (PSRI) is higher than the reference value, it can be seen that the shares are traded at a high price in comparison with the growth rate of the enterprise. Also, where the Price per Sales Ratio Index (PSRI) is lower than the reference value, it can be seen that the shares are traded at a low price in comparison with the growth rate of the enterprise. Accordingly, according to the present invention, it can induce an appropriate investment decision based on the relation between the Price per Sales Ratio Index (PSRI) and the reference value, which is one example of the investment decision index. According to the present invention, when the Price per Sales Ratio Index (PSRI) is displayed therein, the market capitalization data is displayed together with the sales, so that the disparate ratio between the market capitalization data and the sales can be illustrated. Also, the Price per Sales Ratio Index (PSRI) can be displayed together with the market capitalization data and the sales in a graph format. Since the sales of the recent four quarters are added up to be announced, the Price per Sales Ratio Index (PSRI) of the corresponding quarter is calculated on the basis of the Price per Sales Ratio (PSR) of the recent four quarters. According to the present invention, when the Price per Sales Ratio Index (PSRI) is below "1", it is judged that there is the right time to invest. That is, where the Price per Sales Ratio Index (PSRI) of the recent 1 year including the corresponding quarter is below "1", it is suggested that the share price is traded at a low price in comparison with the past data. Accordingly, even if the investor is not familiar with the terms and definition of the Price per Sales Ratio (PSR), it can encourage the proper investment decisions through the graph trend of the Price per Sales Ratio Index (PSRI).

Although a preferred embodiment of the present invention has been described for illustrative purposes, those skilled in the art will appreciate that various modifications, additions and substitutions are possible, without departing from the scope and spirit of the invention as disclosed in the accompanying claims.

### Industrial Applicability

The present invention relates to a method for displaying a current disparate ratio for an enterprise value using a difference between market value for an enterprise and a basic analysis in that it expresses a disparate ratio between two indexes as a graph form through a basic analysis and an accounting reference accepted and published generally by means of the electronic disclosure system and so on in connection with the market value of the enterprise traded in a stock exchange, a KOSDAQ, and a curb market etc., so that it increases a convenience of an information requestor and an investment objectivity, thereby being effectively utilized in the investment field in stock.

## Claims

1. A method for displaying a current disparate ratio for an enterprise value using a difference between market value for an enterprise and a basic analysis through a computer device having an application program for receiving data from a stock information service server and an electronic disclosure system server for a period of time by means of an online network comprising steps of:
entering personal information into a stock information server on the basis of a membership verification procedure;
storing and managing information related to interest items of a membership by using the stock information server;
receiving a market capitalization data for the interest items from the stock information sever;
receiving a net asset value data for the interest items from the electronic disclosure system server;
storing the market capitalization data and net asset value data in a graphic format by time through the stock information server; and
assigning the market capitalization data and net asset value data to a predetermined axis to be displayed thereon.

2. A method as claimed in claim 1, further comprising steps of judging as to whether the difference between the market capitalization data and net asset value data reaches the proper disparate ratio or not through the stock information server.

3. A method as claimed in claim 1, further comprising steps of assigning the net income illustrated in the income statement and the market capitalization data to a predetermined axis for a certain period through the online network through the stock information service server and the electronic disclosure system server to be displayed thereon and judging as to whether the difference between the market capitalization data by means of the net income and the actual market capitalization data by means of the variation in the stock price reaches a proper disparate ratio or not through the stock information server.

4. A method as claimed in claim 1, further comprising steps of assigning the quarterly total cash data according to a cash flow and the market capitalization data to a predetermined axis for a certain period through the stock information service server and the electronic disclosure system server by means of the online network and judging as to whether the difference between the quarterly total cash data and the market capitalization data reaches a proper disparate ratio or not through the stock information server.

5. A method for displaying a current disparate ratio for an enterprise value using a difference between market value for an enterprise and a basic analysis through a computer device having an application program for receiving data from a stock information service server and an electronic disclosure system server for a period of time by means of an online network comprising steps of:
entering personal information into a stock information server on the basis of a membership verification procedure;
storing and managing information related to interest items for a membership by using the stock information server;
receiving a market capitalization data for the interest items from the stock information sever;
receiving a net asset value data for the interest items from the electronic disclosure system server;
storing the market capitalization data and net asset value data in a graphic format by time through the stock information server;
displaying the stock information data on a preferred stock and a common stock of the interest item of the membership stored in the stock information server and the disparate ratio on the data difference of the preferred stock and the common stock; and
judging as to whether the data difference between the preferred stock and the common stock reaches a proper disparate ratio or not through the stock information server.

6. A method for displaying a current disparate ratio for an enterprise value using a difference between market value for an enterprise and a basic analysis through a computer device having an application program for receiving data from a stock information service server and an electronic disclosure system server for a period of time by means of an online network comprising steps of:
entering personal information into a stock information server on the basis of a membership verification procedure;
storing and managing information related to interest items for a membership by using the stock information server;
receiving a market capitalization data for the interest items from the stock information sever;
receiving a net asset value data for the interest items from the electronic disclosure system server;
storing the market capitalization data and net asset value data in a graphic format by time through the stock information server;
assigning the market capitalization data and net asset value data to a predetermined axis to be displayed thereon;
calculating an investment decision index capable of deciding acceptance or rejection of the investment based on the market capitalization data and the net asset value data stored in the stock information server; and
making the investment decisions by means of the investment decision index through the stock information server.

7. A method as claimed in claim 6, wherein the investment decision index is a Price Book-value Ratio Index (PBRI) of deducting an average of a Price Book-value Ratio of a given period of time from the current Price Book-value Ratio (PBR) as a percentage.

8. A method as claimed in claim 6, wherein the investment decision index is A Price Earning Ratio Index (PERI) of deducting an average of a Price Earning Ratio (PER) of a given period of time from a Price Earning Ratio (PER) of the recent four quarters as a percentage.

9. A method as claimed in claim 6, wherein the investment decision index is a Price per Sales Ratio Index (PSRI) of showing the price of the common stock on sales per share of dividing the sales of the recent four quarters by the number of shares.

10. A method as claimed in claims 5 or 6, further comprising displaying a new product information of the enterprise corresponding to the interest item, a subsidiary enterprise information, a corporate communication information related to the investment information, and sales information and update materials of the corresponding enterprise through the stock information server.

11. A method as claimed in any one of claims 1, 2, 5 and 6, further comprising expressing a plus (+) component and a minus (-) component of the assets of the enterprise corresponding to the interest item as the amount of money and the percentage to be displayed thereon.
